# EUROPÄISCHE PATENTSCHRIFT

(11) **EP 2 435 589 B1**
(45) Veröffentlichungstag und Bekanntmachung des Hinweises auf die Patenterteilung: **13.03.2019**
(21) Anmeldenummer: 10727339.3
(22) Anmeldetag: 08.05.2010
(51) Int. Cl.: C21D 7/06, C21D 7/08, C22F 1/18, B23P 6/00, F01D 5/28, B23P 9/02

(54) **VERFAHREN UND VORRICHTUNG ZUM OBERFLÄCHENVERFESTIGEN EINES BAUTEILS, WELCHES ZUMINDEST IM BEREICH SEINER ZU VERFESTIGENDEN OBERFLÄCHE AUS EINER INTERMETALLISCHEN VERBINDUNG BESTEHT**
METHOD AND APPARATUS FOR SURFACE HARDENING A COMPONENT, WHICH IS MADE OF AN INTERMETALLIC COMPOUND AT LEAST IN THE REGION OF THE SURFACE TO BE HARDENED
PROCÉDÉ ET DISPOSITIF DE DURCISSEMENT DE SURFACE D'UN ÉLÉMENT DE CONSTRUCTION QUI EST CONSTITUÉ DANS LA RÉGION DE SA SURFACE À DURCIR D'UN COMPOSÉ INTERMÉTALLIQUE

(30) Priorität: 28.05.2009 DE 102009023060
(43) Veröffentlichungstag der Anmeldung: 04.04.2012
(73) Patentinhaber: MTU Aero Engines AG, 80995 München (DE)
(72) Erfinder: BAMBERG, Joachim, 85221 Dachau (DE); HESSERT, Roland, 82211 Herrsching (DE); HELM, Dietmar, 85757 Karlsfeld (DE); POLANETZKI, Holger, 85221 Dachau (DE)
(86) Internationale Anmeldenummer: PCT/DE2010/000522
(87) Internationale Veröffentlichungsnummer: WO 2010/136010

(56) Entgegenhaltungen:
- EP-A1- 1 201 773
- DE-A1- 19 756 354
- JP-A- 2004 167 363
- JP-A- 2004 169 100
- US-B1- 6 551 064

## Beschreibung

Die Erfindung betrifft ein Verfahren sowie eine Vorrichtung zum Oberflächenverfestigen eines Bauteils, insbesondere eines Flugzeugbauteils, welches zumindest im Bereich seiner zu verfestigenden Oberfläche aus einer intermetallischen Verbindung besteht.

Viele intermetallischen Verbindungen wie beispielsweise TiAl-Legierungen haben den Vorteil, dass sie relativ leicht sind, gute Festigkeits- und Steifigkeitseigenschaften besitzen und hohe Arbeitstemperaturen verkraften. Aufgrund dieser Eigenschaften werden sie als Leichtbauwerkstoff für bestimmte Bauteile, insbesondere für Bauteile von Flugzeugtriebwerken und dergleichen, verwendet und können dabei Nickellegierungen mit wesentlich höherer Dichte ersetzen. Nachteilig ist jedoch, dass intermetallische Verbindungen teilweise keramische Eigenschaften besitzen und bei Raumtemperatur relativ spröde und schlagempfindlich sind. Aus Festigkeitsgründen werden bei Bauteilen, die zumindest teilweise aus einer derartigen intermetallischen Verbindung gefertigt sind, oberflächennahe Druckspannungen gewünscht. Hierzu muss die Oberfläche des Bauteils entsprechend verfestigt werden. Aus dem Stand der Technik sind als übliche Verfahren zum Oberflächenverfestigen derartiger Bauteile Kugelstrahl- und Festwalzverfahren bekannt.

Als nachteilig an diesen Verfahren zum Oberflächenverfestigen ist jedoch der Umstand anzusehen, dass es aufgrund der vergleichsweise hohen Sprödigkeit von intermetallischen Verbindungen zu lokaler Rissbildung im Bauteil kommen kann. Dies führt zu einem hohen Ausschuss und entsprechend hohen Prozesskosten.

Aus der japanischen Offenlegungsschrift JP 2004 169100 A ist eine Vorrichtung zum Oberflächenverfestigen eines Bauteils mit einem Verfestigungswerkzeug bekannt, mittels welchem die Oberfläche des Bauteils mit einer Kraft beaufschlagbar ist. Die Vorrichtung weist eine induktive Heizeinrichtung auf, mittels welcher das Bauteil auf eine oberhalb der Standardtemperatur liegende Temperatur erwärmbar ist. Aus der deutschen Offenlegungsschrift DE 197 56 354 A1 ist eine Schaufel für ein Flugzeugtriebwerk bekannt, mit einem Schaufelblatt und einen Schaufelfuß, welche aus einer Legierung auf der Basis von dotierstoffhaltigem γ-Titanaluminid hergestellt sind. Wenigstens ein Teil der Oberflächenschicht der Schaufel weist eine feinkörnige Struktur und der Kern eine grobkörnige Struktur auf. Dabei ist die Duktilität der feinkörnigen Oberflächenschicht höher als die Duktilität des grobkörnigen Kerns.

Aufgabe der vorliegenden Erfindung ist es, ein Verfahren sowie eine Vorrichtung der eingangs genannten Art zu schaffen, mittels welchen eine verbesserte Oberflächenverfestigung eines Bauteils, welches zumindest im Bereich seiner zu verfestigenden Oberfläche aus einer intermetallischen Verbindung besteht, ermöglicht ist.

Die Aufgabe wird erfindungsgemäß durch ein Verfahren mit den Merkmalen des Patentanspruchs 1 sowie durch eine Vorrichtung mit den Merkmalen des Patentanspruchs 7 gelöst. Vorteilhafte Ausgestaltungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Bei einem erfindungsgemäßen Verfahren zum Oberflächenverfestigen eines Bauteils gemäß dem Oberbegriff des Anspruchs 1 ist vorgesehen, dass das Bauteil zumindest in seinem aus der intermetallischen Verbindung bestehenden Bereich auf eine Temperatur oberhalb 25°C wird, wobei die Temperatur derart eingestellt wird, dass eine Duktilität der intermetallischen Verbindung bei dieser Temperatur gegenüber einer Duktilität der intermetallischen Verbindung bei 25°C erhöht ist. Mit anderen Worten wird durch Aufwärmen des Bauteils - bzw. zumindest seines aus der intermetallischen Verbindung bestehenden und zu verfestigenden Bereichs - die intermetallische Verbindung in einen duktileren Zustand überführt. Hierdurch wird beim Oberflächenverfestigen eine erhebliche Reduzierung und im Idealfall eine vollständige Vermeidung von Rissbildungen und sonstigen Oberflächenbeschädigungen erzielt. Zudem werden verbesserte, tiefreichende Verfestigungszustände sowie die Ausbildung nanostrukturierter Gefüge in der intermetallischen Verbindung erzeugt, wodurch die mechanischen Eigenschaften des Bauteils zusätzlich erheblich verbessert werden. Mit Hilfe des Verfahrens sind zudem hohe Kostensenkungen ermöglicht, da der Anteil an Ausschuss und untauglichen Bauteilen signifikant verringert wird. Dabei kann vorgesehen sein, dass die Temperatur während des Verfahrens ein- und/oder mehrfach kontinuierlich und/oder diskontinuierlich verändert wird, um unterschiedliche Duktilitätsverläufe zu erzeugen. Das Verfahren kann sowohl im Rahmen einer Neuteileanfertigung als auch bei Reparaturen angewendet werden. Beispielsweise ist es möglich, durch Reibverschleiß oder dergleichen stark beanspruchte Bauteile oder Bauteilbereiche von Gasturbinen zu verfestigen. Ebenso ist es durch dieses Oberflächenverfestigungsverfahren möglich, Verzüge, Materialverfrachtungen, Stoßfugen oder andere Defekte zu minimieren bzw. weitestgehend zu eliminieren.

In einer vorteilhaften Ausgestaltung der Erfindung ist vorgesehen, dass das Bauteil zumindest in seinem aus der intermetallischen Verbindung bestehenden Bereich auf eine Temperatur über 80°C, insbesondere über 100°C, und/oder auf eine Temperatur erwärmt wird, bei welcher die Duktilität der intermetallischen Verbindung um wenigstens 5%, insbesondere um wenigstens 10%, gegenüber ihrer Duktilität bei 25°C erhöht ist. Hierdurch ist vorteilhaft sichergestellt, dass in Abhängigkeit der jeweiligen Eigenschaften der betreffenden intermetallischen Verbindung eine ausreichende Duktilitätserhöhung gegeben und das Auftreten von Rissbildungen besonders zuverlässig reduziert bzw. vollständig vermieden wird.

Mit dem erfindungsgemäßen Verfahren wird ein Bauteil oberflächenverfestigt, dessen intermetallische Verbindung TiAl umfasst und/ oder aus TiAl besteht. Hierdurch kann das Bauteil besonders leicht, mit einem hohen Elastizitätsmodul sowie mit besonders hoher Festigkeit und guter Beständigkeit gegenüber Oxidation und Korrosion hergestellt werden. Zudem ist das derart hergestellte und oberflächenverfestigte Bauteil bis Temperaturen von 750 °C kriechfest, wodurch es sich insbesondere zur Verwendung als Flugzeugbauteil eignet. Dabei kann vorgesehen sein, dass die Temperatur, auf welche das Bauteil beim Oberflächenverfestigen erwärmt wird, in Abhängigkeit der jeweils vorliegenden intermetallischen Phase des Titanaluminids gewählt und eingestellt wird.

In einer weiteren vorteilhaften Ausgestaltung der Erfindung ist vorgesehen, dass das Bauteil durch ein Kugelstrahlverfahren, insbesondere durch Ultraschallkugelstrahlen, und/oder durch ein Walzverfahren, insbesondere durch Festwalzen, und/oder durch ein Ultrasonic Impact Treatment-Verfahren (UIT) oberflächenverfestigt wird. Hierdurch wird eine besonders hohe Flexibilität und Anpassbarkeit des Verfahrens an unterschiedliche intermetallische Verbindungen und Bauteiltypen ermöglicht.

In weiterer Ausgestaltung ist vorgesehen, dass das Bauteil mit einem Verfestigungswerkzeug oberflächenverfestigt wird, wobei das Verfestigungswerkzeug auf eine Temperatur oberhalb 25°C erwärmt ist. Mit anderen Worten werden sowohl das Bauteil - vollständig oder zumindest in seinem aus der intermetallischen Verbindung bestehenden Bereich - und das verwendete Verfestigungswerkzeug erwärmt, wodurch eine unerwünschte Abkühlung des Bauteil während des Oberflächenverfestigens vermieden wird. Hierdurch bleibt die durch das Erwärmen erhöhte Duktilität während des Verfahrens erhalten, wodurch einerseits eine Beschädigung des Bauteils vermieden und andererseits besonders tiefreichende Verfestigungszustände im Bauteil erzielt werden. Dabei kann auch vorgesehen sein, dass das Bauteil - bzw. sein zu verfestigende Bereich aus der intermetallischen Verbindung - mittels des Verfestigungswerkzeugs erwärmt wird.

Eine besonders prozesssichere Verfahrensführung wird in weiterer Ausgestaltung dadurch erzielt, dass das Verfestigungswerkzeug und das Bauteil auf zumindest im Wesentlichen gleiche Temperaturen erwärmt werden. Unter im Wesentlichen gleiche Temperaturen sind dabei Temperaturunterschiede von etwa ±10 K zu verstehen. Hierdurch kann die Duktilitätserhöhung des Bauteils besonders präzise eingestellt und während des gesamten Verfahrens trotz Kraftbeaufschlagung durch das Verfestigungswerkzeug konstant auf dem jeweils eingestellten Parameterwert gehalten werden.

Indem das Bauteil unter Schutzgasatmosphäre und/oder bei gegenüber dem Standarddruck vermindertem Druck, insbesondere im Vakuum, oberflächenverfestigt wird, wird eine unerwünschte Oberflächenoxidation des Bauteils vorteilhaft vermieden. Unter Standarddruck ist ein Druck p=1 atm bzw. p=101325 Pa zu verstehen.

Ein weiterer Aspekt der Erfindung betrifft eine Vorrichtung zum Oberflächenverfestigen eines Bauteils, insbesondere eines Flugzeugbauteils. Die Vorrichtung umfasst ein Verfestigungswerkzeug mit einem stempelartigen Verfestigungswerkzeugkopf mittels welchem die Oberfläche des Bauteils, welches zumindest im Bereich seiner zu verfestigenden Oberfläche aus einer intermetallischen Verbindung besteht, mit einer Kraft beaufschlagbar ist. Eine verbesserte Oberflächenverfestigung des Bauteils wird dadurch erreicht, dass die Vorrichtung eine Heizeinrichtung umfasst, mittels welcher das Bauteil zumindest in seinem aus der intermetallischen Verbindung bestehenden Bereich auf eine Temperatur oberhalb 25°C erwärmbar ist, und die Temperatur derart einstellbar ist, dass eine Duktilität der intermetallischen Verbindung bei dieser Temperatur gegenüber einer Duktilität der intermetallischen Verbindung bei 25°C erhöht ist. Erfindungsgemäß ist die Heizspule einer induktiven Heizeinrichtung um den Verfestigungswerkzeugkopf angeordnet. Mit anderen Worten kann das Bauteil - bzw. zumindest sein aus der intermetallischen Verbindung bestehender und zu verfestigender Bereich - mit Hilfe der Heizeinrichtung erwärmt und die intermetallische Verbindung in einen duktileren Zustand überführt werden. Hierdurch ist beim Oberflächenverfestigen eine erhebliche Reduzierung und im Idealfall eine vollständige Vermeidung von Rissbildungen und sonstigen Oberflächenbeschädigungen ermöglicht. Zudem können mit Hilfe der erfindungsgemäßen Vorrichtung Bauteile mit verbesserten, tiefreichenden Verfestigungszuständen erzeugt und nanostrukturierter Gefüge in der intermetallischen Verbindung ausgebildet werden, wodurch die mechanischen Eigenschaften des Bauteils zusätzlich erheblich verbessert werden. Mit Hilfe der Vorrichtung sind zudem hohe Kostensenkungen ermöglicht, da der Anteil an Ausschuss und untauglichen Bauteilen signifikant verringert werden kann. Dabei kann vorgesehen sein, dass die Heizeinrichtung ausgebildet ist, die Temperatur während des Verfahrens ein- und/oder mehrfach kontinuierlich und/oder diskontinuierlich zu verändern, um gezielte Duktilitätsverläufe zu erzeugen. Die im Zusammenhang mit dem erfindungsgemäßen Verfahren vorgestellten bevorzugten Ausführungsformen und Weiterbildungen sowie deren Vorteile gelten entsprechend für die erfindungsgemäße Vorrichtung.

Dadurch, dass die Heizeinrichtung eine Induktionsspule umfasst, kann das Bauteil besonders einfach, zuverlässig und flexibel mit Hilfe von magnetischer Induktion auf die jeweils gewünschte Temperatur erwärmt werden. Eine induktive Heizeinrichtung erlaubt dabei sehr kurze Reaktionszeit bei Änderungen der Temperatureinstellung und einen gut dosierbaren Energieeintrag in das Bauteil. Auch die Einstellung unterschiedlicher Temperaturen bzw. eine über ein Temperaturprogramm gesteuerte Erwärmung des Bauteils kann hierdurch besonders schnell und präzise vorgenommen werden. Zudem werden benachbarte Bereiche der Vorrichtung und des Bauteils nicht oder nur geringfügig durch sekundäre Rückerwärmung erwärmt.

Mit Hilfe eines stempelartigen Verfestigungswerkzeugkopf kann auf konstruktiv einfache Weise und unabhängig von der Oberflächengeometrie eine punktuelle Verdichtung des Bauteilmaterials und damit eine besonders tiefreichende Druckspannung erzeugt werden.

In einer vorteilhaften Ausgestaltung der Erfindung ist vorgesehen, dass das Verfestigungswerkzeug einen gepanzerten Verfestigungswerkzeugkopf, insbesondere einen Verfestigungswerkzeugkopf aus Wolframcarbid und/oder Titannitrid und/oder Bornitrid, umfasst. Dies erlaubt nahezu unabhängig vom Material des Bauteils eine besonders effiziente Kraftübertragung vom Verfestigungswerkzeug auf die Oberfläche des Bauteils sowie eine damit verbundene hohe plastische Verformung des Bauteilmaterials. Weiterhin wird hierdurch die Haltbarkeit des Verfestigungswerkzeugs bzw. seines Verfestigungswerkzeugkopfes vorteilhaft gesteigert. Die Verwendung von Wolframcarbid und/oder Titannitrid und/oder Bornitrid erlaubt dabei eine besonders hohe Härte und Verschleißfestigkeit des Verfestigungswerkzeugkopfs.

Weitere Vorteile ergeben sich, wenn die Vorrichtung eine Strahlkammer, in welcher zumindest der zu verfestigende Oberflächenbereich des Bauteils anordenbar ist, umfasst. Durch eine Strahlkammer ist zusätzlich eine einfache Möglichkeit geschaffen, den zu Oberflächenbereich des Bauteils gezielt durch Beaufschlagung mit einem Strahlmedium zu verfestigen. Dabei kann weiterhin vorgesehen sein, dass die Strahlkammer ausgebildet ist, an unterschiedliche zu bearbeitende Bauteiltypen angepasst zu werden. Hierzu kann die Strahlkammer beispielsweise eine Kammerwand mit einem verstellbaren Wandbereich umfassen,

Weitere Merkmale der Erfindung ergeben sich aus den Ansprüchen, den Ausführungsbeispielen und den Zeichnungen. Dabei zeigen:
- Fig. 1: eine perspektivische Prinzipdarstellung eines aus einer intermetallischen Verbindung bestehenden Bauteils, welches mittels einer erfindungsgemäßen Vorrichtung zum Oberflächenverfestigen erwärmt und mit einer Kraft beaufschlagt wird; und
- Fig. 2: eine schematische Schnittansicht einer nicht erfindungsgemäßen Ausführung der Vorrichtung zum Oberflächenverfestigen.

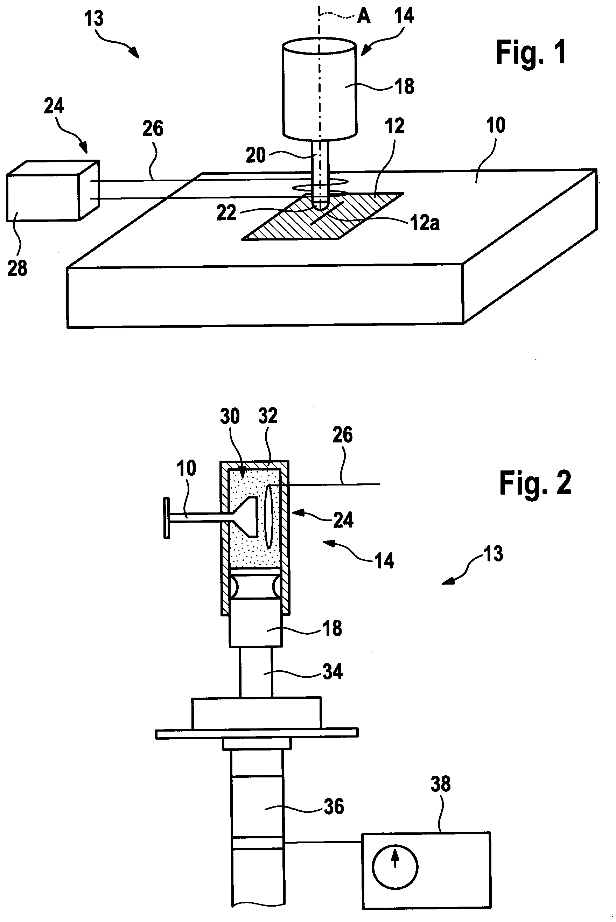

In den Zeichnungen sind gleiche oder funktionsgleiche Elemente mit identischen Bezugszeichen versehen. Fig. 1 zeigt eine perspektivische Prinzipdarstellung eines aus einer intermetallischen Verbindung bestehenden Bauteils 10, dessen Oberfläche 12 mittels einer erfindungsgemäßen Vorrichtung 13 zum Oberflächenverfestigen erwärmt und mit einer Kraft beaufschlagt wird. Das Bauteil 10 ist vorliegend als Gasturbinenbauteil für ein Flugzeug ausgebildet und besteht aus TiAl. Zum Oberflächenverfestigen wird die Oberfläche 12 des Bauteils mittels eines sonotrodenartigen Verfestigungswerkzeugs 14 der Vorrichtung 13 beaufschlagt, wodurch eine plastische Verformung des Bauteils 10 und lokale Druckspannungen im Bauteil 10 erzeugt werden. Das Verfestigungswerkzeug 14 wird dabei im Ultraschallfrequenzbereich angeregt, wodurch sich ein sogenanntes Ultrasonic Impact Treatment (UIT) des Bauteils 10 ergibt. Bei dem Bauteil 10 kann es sich grundsätzlich um ein Neuteil oder um ein Gebrauchtteil handeln, welches beispielhaft einen Kratzer oder eine andere Beschädigung als Oberflächenfehler 12a aufweisen kann. Durch die Reparatur wird ein vom Kratzer ausgehender Rissstart oder Rissfortschritt zuverlässig vermieden. Alternativ oder zusätzlich können jedoch auch andere Oberflächenfehler 12a wie beispielsweise lokale Materialinhomogenitäten, ungünstige Spannungszustände bei Fügeverbindungen, Risse, Vertiefungen oder dergleichen repariert werden, um eine Rissbildung bzw. Rissausbreitung zu verhindern.

Das Bauteil 10 ist vorliegend dünnwandig ausgebildet und kann nur von einer Seite aus zugänglich sein. Im Unterschied zum Stand der Technik muss eine etwaige Hinterfütterung (nicht gezeigt) zur Durchführung des Reparaturverfahrens jedoch nicht demontiert werden. Zudem besitzt das dünnwandige Bauteil 10 durch das hochfrequente Kraftbeaufschlagen (Hämmern) mit dem Verfestigungswerkzeugs 14 genügend träge Masse, um ohne Hinterstützung und ohne makroskopische Verformung verfestigt zu werden. Hierdurch können sowohl eine Reparatur als auch eine Oberflächenverfestigung bei einem Neuteil besonders schnell und wirtschaftlich durchgeführt werden.

Das Verfestigungswerkzeug 14, dessen grundsätzlicher Aufbau aus dem Stand der Technik bekannt ist, umfasst seinerseits einen Aktuator 18, welcher einen stempelartigen Verfestigungswerkzeugkopf 20 in Schwingungen im Ultraschallfrequenzbereich versetzt. Der Verfestigungswerkzeugkopf 20, welcher gepanzert ausgebildet ist und an seinem zur Beaufschlagung dienenden Endbereich z. B. eine Wolframcarbid-Halbkugel 22 aufweist, überträgt seinerseits die Schwingungsenergie auf die Oberfläche 12 bzw. auf den fehlerhaften Oberflächenbereich 12a, wodurch das Bauteil 10 an der beaufschlagten Stelle verfestigt wird. Eine in Wirkrichtung des Verfestigungswerkzeugs 14 verlaufende Verfestigungswerkzeugachse A ist im vorliegenden Beispiel parallel zu einer Flächennormalen der Oberfläche 12 im Beaufschlagungsbereich angeordnet. Alternativ oder zusätzlich kann die Verfestigungswerkzeugachse A in einem Winkel, insbesondere in einem Winkel zwischen 10° und 80°, zur Flächennormalen der Oberfläche 12 im Beaufschlagungsbereich angeordnet werden, um vorzugsorientierte Verrestigungszustände zu erzielen.

Das Bauteil 10 und das Verfestigungswerkzeug 14 werden während der Reparatur manuell und/oder maschinell geführt relativ zueinander bewegt. Im vorliegenden Ausführungsbeispiel verbleibt dabei das Bauteil 10 ortsfest, während das Verfestigungswerkzeug 14 bewegt wird. Dies ermöglicht beispielsweise eine Reparatur des Bauteils 10, ohne dass dieses ausgebaut werden müsste. Es kann jedoch auch vorgesehen sein, dass das Bauteil 10 mittels einer Haltevorrichtung (nicht dargestellt) gehalten wird. Als Haltevorrichtung kann beispielsweise ein Kreuztisch verwendet werden. Ebenso kann vorgesehen sein, dass das Bauteil durch Anlegen eines Unterdrucks an der Haltevorrichtung gehalten wird.

Um zu verhindern, dass es beim Oberflächenverfestigen aufgrund der vergleichsweise hohen Sprödigkeit der intermetallischen Verbindung TiAl zu lokaler Rissbildung im Bauteil 10 kommt, umfasst die Vorrichtung 13 eine Heizeinrichtung 24, mittels welcher das Bauteil 10 auf eine oberhalb eine Standardtemperatur von 25°C liegende Temperatur erwärmt wird. Die Temperatur wird dabei derart eingestellt, dass eine Duktilität der intermetallischen Verbindung bei dieser Temperatur gegenüber einer Duktilität der intermetallischen Verbindung bei der Standardtemperatur von 25°C erhöht ist. Die Heizeinrichtung 24 umfasst ihrerseits eine Induktionsspule 26, welche mittels eines zugeordneten Hochfrequenzgenerators (HF-Generator) 28 betrieben wird. Die Heizeinrichtung 24 ist dabei derart angeordnet, dass sie sowohl das Verfestigungswerkzeug 14 als auch die Oberfläche 12 des Bauteils 10 auf eine vorgegebene Temperatur erwärmt. Die Heizeinrichtung 24 kann dabei gesteuert und/oder geregelt betrieben werden, wodurch das Einstellen unterschiedlicher Temperaturen oder das Fahren eines Temperaturprogramms ermöglicht sind. Durch das druckluftlose Wirkprinzip des Ultrasonic Impact Treatments wird zudem eine unerwünschte Abkühlung des Bauteils 10 vorteilhaft vermieden. Dabei kann vorgesehen sein, dass das Oberflächenverfestigungsverfahren im Vakuum und/oder unter Schutzgas durchgeführt wird, um eine Oberflächenoxidation des Bauteils 10 zu vermeiden.

Fig. 2 zeigt eine schematische Schnittansicht einer nicht erfindungsgemäßen Ausführung der Vorrichtung 13 zum Oberflächenverfestigen. Im Unterschied zum vorhergehenden Ausführungsbeispiel umfasst die Vorrichtung 13 als Verfestigungswerkzeug 14 eine mit einem Strahlmedium 30 gefüllte Strahlkammer 32 mit veränderbarem Volumen. Das Bauteil 10 ist abschnittsweise innerhalb der Strahlkammer 32 angeordnet und wird durch Ultraschall-Kugelstrahlen oberflächenverfestigt. Hierzu wird das Strahlmedium 30 mittels eines sonotrodenartigen Aktuators 18 in an sich bekannter Weise im Ultraschallfrequenzbereich angeregt und auf die Oberfläche 12 des Bauteils 10 beschleunigt. Der Aktuator 18 wird seinerseits über einen Verstärker 34 und einen piezoelektrischen Antrieb 36 betätigt, wobei der piezoelektrische Antrieb 36 über einen angeschlossenen Generator 38 betätigt wird. Die Induktionsspule 26 der Heizeinrichtung 24 ist im vorliegenden Beispiel innerhalb der Strahlkammer 32 angeordnet und erhitzt sowohl das Bauteil 12 als auch die Strahlkammer 32 und das Strahlmedium 30. Der mit der Induktionsspule 26 verbundene HF-Generator 28 ist aus Gründen der Übersichtlichkeit nicht dargestellt. Alternativ kann vorgesehen sein, dass die Induktionsspule 26 außerhalb der Strahlkammer 32 angeordnet ist. Auch hier wird durch das ebenfalls druckluftlose Wirkprinzip des Ultraschall-Kugelstrahlens eine unerwünschte Abkühlung des Bauteils 10 vorteilhaft vermieden. Dabei kann auch bei der vorliegenden Ausführung vorgesehen sein, dass das Oberflächenverfestigungsverfahren im Vakuum und/oder unter Schutzgas durchgeführt wird, um eine Oberflächenoxidation des Bauteils 10 zu vermeiden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlem, DIN-Toleranzen und dergleichen - als vom Rahmen der Erfindung mitumfasst anzusehen.

## Patentansprüche

1. Verfahren zum Oberflächenverfestigen eines Bauteils (10), insbesondere eines Flugzeugbauteils, bei welchem die Oberfläche (12) des Bauteils (10), welches zumindest im Bereich seiner zu verfestigenden Oberfläche (12) mit einer mechanischen Kraft beaufschlagt wird, wobei die Oberfläche (12) aus einer intermetallischen Verbindung TiAl besteht und/ oder eine intermetallische TiAl Verbindung umfasst,
**dadurch gekennzeichnet, dass**
das Bauteil (10) zumindest in seinem aus der intermetallischen Verbindung bestehenden Bereich auf eine Temperatur oberhalb 25 °C erwärmt wird, wobei die Temperatur derart eingestellt wird, dass eine Duktilität der intermetallischen Verbindung bei dieser Temperatur gegenüber einer Duktilität der intermetallischen Verbindung bei 25 °C erhöht ist.

2. Verfahren nach Anspruch 1, **dadurch gekennzeichnet, dass** das Bauteil (10) zumindest in seinem aus der intermetallischen Verbindung bestehenden Bereich auf eine Temperatur über 80°C, insbesondere über 100°C, und/oder auf eine Temperatur erwärmt wird, bei welcher die Duktilität der intermetallischen Verbindung um wenigstens 5%, insbesondere um wenigstens 10%, gegenüber ihrer Duktilität bei 25 °C erhöht ist.

3. Verfahren nach einem der Ansprüche 1 bis 2, **dadurch gekennzeichnet, dass** das Bauteil (10) durch ein Kugelstrahlverfahren, insbesondere durch Ultraschallkugelstrahlen, und/oder durch ein Walzverfahren, insbesondere durch Festwalzen, und/oder durch ein Ultrasonic Impact Treatment-Verfahren (UIT) oberflächenverfestigt wird.

4. Verfahren nach einem der Ansprüche 1 bis 3, **dadurch gekennzeichnet, dass** das Bauteil (10) mit einem Verfestigungswerkzeug (14) oberflächenverfestigt wird, wobei das Verfestigungswerkzeug (14) auf eine Temperatur oberhalb 25 °C erwärmt ist.

5. Verfahren nach Anspruch 4, **dadurch gekennzeichnet, dass** das Verfestigungswerkzeug (14) und das Bauteil (10) auf zumindest im Wesentlichen gleiche Temperaturen erwärmt werden.

6. Verfahren nach einem der Ansprüche 1 bis 5, **dadurch gekennzeichnet, dass** das Bauteil (10) unter Schutzgasatmosphäre und/oder bei gegenüber dem Standarddruck vermindertem Druck, insbesondere im Vakuum, oberflächenverfestigt wird.

7. Vorrichtung (13) zum Oberflächenverfestigen eines Bauteils (10), insbesondere eines Flugzeugbauteils, umfassend ein Verfestigungswerkzeug (14) mit einem stempelartigen Verfestigungswerkzeugkopf (20), mittels welchem die Oberfläche (12) des Bauteils (10), welches zumindest im Bereich seiner zu verfestigenden Oberfläche (12) aus einer intermetallischen Verbindung besteht, mit einer Kraft beaufschlagbar ist,
wobei
die Vorrichtung (13) eine Heizeinrichtung (24) umfasst,
mittels welcher das Bauteil (10) zumindest in seinem aus der intermetallischen Verbindung bestehenden Bereich auf eine Temperatur oberhalb 25 °C erwärmbar ist, und
die Temperatur derart einstellbar ist, dass eine Duktilität der intermetallischen Verbindung bei dieser Temperatur gegenüber einer Duktilität der intermetallischen Verbindung bei 25 °C erhöht ist,
**dadurch gekennzeichnet, dass**
die Heizspule (2) einer induktiven Heizeinrichtung (24) um den stempelartigen Verfestigungswerkzeugkopf (20) angeordnet ist.

8. Vorrichtung (13) nach Anspruch 7, **dadurch gekennzeichnet, dass** das Verfestigungswerkzeug (14) einen gepanzerten Verfestigungswerkzeugkopf (20), insbesondere einen Verfestigungswerkzeugkopf (20) aus Wolframcarbid (22) und/oder Titannitrid und/oder Bornitrid, umfasst.

9. Vorrichtung (13) nach Anspruch 7 oder 8, **dadurch gekennzeichnet, dass** diese eine Strahlkammer (32), in welcher zumindest der zu verfestigende Oberflächenbereich (12) des Bauteils (10) anordenbar ist, umfasst.

## Claims

1. Method for surface hardening a component (10), in particular an aircraft component, in which the surface (12) of the component (10), which is subjected to a mechanical force at least in the region of the surface (12) thereof to be hardened, the surface (12) consisting of an intermetallic compound TiAl and/or comprising an intermetallic TiAl compound, **characterized in that** the component (10) is heated to a temperature greater than 25°C at least in the region thereof that consists of the intermetallic compound, the temperature being set such that the ductility of the intermetallic compound at this temperature is increased with respect to the ductility of the intermetallic compound at 25°C.

2. Method according to claim 1, **characterized in that** the component (10) is heated, at least in the region thereof that consists of the intermetallic compound, to a temperature greater than 80°C, in particular greater than 100°C, and/or to a temperature at which the ductility of the intermetallic compound is increased by at least 5%, in particular by at least 10%, with respect to the ductility thereof at 25°C.

3. Method according to either claim 1 or claim 2, **characterized in that** the component (10) is surface-hardened by a shot peening method, in particular by ultrasonic shot peening, and/or by a rolling method, in particular by deep rolling, and/or by an ultrasonic impact treatment method (UIT).

4. Method according to any of claims 1 to 3, **characterized in that** the component (10) is surface-hardened using a hardening tool (14), the hardening tool (14) being heated to a temperature greater than 25°C.

5. Method according to claim 4, **characterized in that** the hardening tool (14) and the component (10) are heated to at least substantially the same temperature.

6. Method according to any of claims 1 to 5, **characterized in that** the component (10) is surface-hardened under a protective gas atmosphere and/or at a pressure that is reduced with respect to the standard pressure, in particular in a vacuum.

7. Device (13) for surface hardening a component (10), in particular an aircraft component, comprising a hardening tool (14) that has a stamp-like hardening tool head (20), by means of which the surface (12) of the component (10) that consists, at least in the region of the surface (12) thereof to be hardened, of an intermetallic compound can be subjected to a force, the device (13) comprising a heating apparatus (24) by means of which the component (10) can be heated to a temperature greater than 25°C at least in the region thereof that consists of the intermetallic compound, and it being possible to set the temperature such that the ductility of the intermetallic compound at this temperature is increased with respect to the ductility of the intermetallic compound at 25°C, **characterized in that** the heating coil (2) of an inductive heating apparatus (24) is arranged around the stamp-like hardening tool head (20).

8. Device (13) according to claim 7, **characterized in that** the hardening tool (14) comprises an armored hardening tool head (20), in particular a hardening tool head (20) made of tungsten carbide (22) and/or titanium nitride and/or boron nitride.

9. Device (13) according to either claim 7 or claim 8, **characterized in that** said device comprises a peening chamber (32) in which at least the surface region (12) of the component (10) that is to be hardened can be arranged.

## Revendications

1. Procédé de durcissement de surface d'un composant (10), en particulier d'un composant d'aéronef, dans lequel la surface (12) du composant (10), qui est sollicité par une force mécanique au moins dans la région de sa surface (12) à durcir, la surface (12) étant constituée d'un composé intermétallique de TiAl et/ou comprenant un composé intermétallique de TiAl, **caractérisé en ce que**
le composant (10) est chauffé au moins dans sa région constituée du composé intermétallique à une température supérieure à 25 °C, la température étant réglée de sorte qu'une ductilité du composé intermétallique est augmentée à cette température par rapport à une ductilité du composé intermétallique à 25 °C.

2. Procédé selon la revendication 1, **caractérisé en ce que** le composant (10) est chauffé au moins dans sa région constituée du composé intermétallique à une température supérieure à 80 °C, en particulier supérieure à 100 °C, et/ou à une température à laquelle la ductilité du composé intermétallique est augmentée d'au moins 5 %, en particulier d'au moins 10 %, par rapport à sa ductilité à 25 °C.

3. Procédé selon l'une des revendications 1 et 2, **caractérisé en ce que** le composant (10) est durci de surface par un procédé de grenaillage, en particulier par grenaillage aux ultrasons, et/ou par un procédé de laminage, en particulier par galetage, et/ou par un procédé de traitement par impact ultrasonore (UIT).

4. Procédé selon l'une des revendications 1 à 3, **caractérisé en ce que** le composant (10) est durci de surface au moyen d'un outil de durcissement (14), l'outil de durcissement (14) étant chauffé à une température supérieure à 25 °C.

5. Procédé selon la revendication 4, **caractérisé en ce que** l'outil de durcissement (14) et le composant (10) sont chauffés à des températures au moins sensiblement identiques.

6. Procédé selon l'une des revendications 1 à 5, **caractérisé en ce que** le composant (10) est durci de surface sous atmosphère protectrice et/ou sous une pression réduite par rapport à la pression standard, en particulier sous vide.

7. Dispositif (13) de durcissement de surface d'un composant (10), en particulier d'un composant d'aéronef, comprenant un outil de durcissement (14) pourvu d'une tête d'outil de durcissement (20) en forme de poinçon, au moyen de laquelle la surface (12) du composant (10), qui est constitué, au moins dans la région de sa surface (12) à durcir, d'un composé intermétallique, est sollicitée par une force mécanique,
le dispositif (13) comprenant un appareil de chauffage (24)
au moyen duquel le composant (10) peut être chauffé, au moins dans sa région constituée du composé intermétallique, à une température supérieure à 25 °C, et
la température pouvant être réglée de sorte qu'une ductilité du composé intermétallique est augmentée à cette température par rapport à une ductilité du composé intermétallique à 25 °C, **caractérisé en ce que**
la bobine chauffante (2) d'un appareil de chauffage à induction (24) est agencée autour de la tête d'outil de durcissement (20) en forme de poinçon.

8. Dispositif (13) selon la revendication 7, **caractérisé en ce que** l'outil de durcissement (14) comprend une tête d'outil de durcissement (20) blindée, en particulier une tête d'outil de durcissement (20) en carbure de tungstène (22) et/ou en nitrure de titane et/ou en nitrure de bore.

9. Dispositif (13) selon la revendication 7 ou 8, **caractérisé en ce qu'**il comprend une chambre de projection (32) dans laquelle au moins la région de surface (12) à durcir du composant (10) peut être agencée.
